(19) **Europäisches Patentamt**
**European Patent Office**
**Office européen des brevets**

(11) **EP 0 616 984 B1**

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(51) Int. Cl.$^6$: **C03C 3/087**, C03C 3/097

(21) Anmeldenummer: **94102187.5**

(22) Anmeldetag: **12.02.1994**

(54) **Bleifreies Kristallglas mit hoher Lichttransmission**

Lead-free crystal glass with a high light transmission

Verre de cristal sans plomb à haute transmission de lumière

(84) Benannte Vertragsstaaten:
**AT BE DE FR GB IT NL**

(30) Priorität: **25.03.1993 DE 4309701**

(43) Veröffentlichungstag der Anmeldung:
**28.09.1994 Patentblatt 1994/39**

(73) Patentinhaber:
- **Schott Glaswerke**
  **D-55122 Mainz (DE)**
  Benannte Vertragsstaaten:
  **BE DE FR IT NL AT**
- **Carl-Zeiss-Stiftung**
  **trading as SCHOTT GLASWERKE**
  **D-55122 Mainz (DE)**
  Benannte Vertragsstaaten:
  **GB**

(72) Erfinder:
- **Clement, Marc, Dr.**
  **D-55118 Mainz (DE)**
- **Brix, Peter, Dr.**
  **D-55126 Mainz (DE)**
- **Gaschler, Ludwig**
  **D-55120 Mainz (DE)**

(56) Entgegenhaltungen:
WO-A-92/19559          DE-A- 2 839 645
GB-A- 1 054 297          GB-A- 2 115 403

- CHEMICAL ABSTRACTS, Band 114, Nr. 14, 08 April 1991, Columbus, OH (US); Seite 323, Nr. 127720n
- CHEMICAL ABSTRACTS, Band 109, Nr. 2, 11 Juli 1988, Columbus, OH (US); Seite 261, Nr. 10650v
- CHEMICAL ABSTRACTS, Band 83, Nr. 8, 25 August 1975, Columbus, OH (US); Seite 404, Nr. 64853b

**Beschreibung**

Die Erfindung betrifft ein bleifreies Kristallglas zur Herstellung von hochwertigen Gläsern und Haushaltsgegenständen mit einer Lichttransmission von wenigstens 85 %, einen Brechwert $n_d$ von größer als 1.52, einer Dichte von mindestens 2.45 g/cm$^3$, einen $K_2O$ + BaO + ZnO-Anteil von größer 10 Gew.-% mit hoher hydrolytischer Beständigkeit, ohne nachweisbare Bariumlässigkeit und guter Solarisationsbeständigkeit.

Schon früher gab es Versuche, Blei aus Kristallgläsern bzw. aus Bleikristallgläsern durch andere Stoffe zu ersetzen, weil die Gefahr besteht, daß Blei auch in sehr geringen Mengen, wie es z.B. aus solchen Gläsern schon nach kurzer Zeit ausgelaugt werden kann, toxisch auf den menschlichen Organismus wirkt.

Im Rahmen dieser Versuche lag es nahe, stark lichtbrechende ($n_D$ = 1,74) farblose Gläser durch Zusätze von Titandioxid (zum Teil bis zu fast 50 Gew.-%), mit seinem hohen Brechungsindex, herzustellen.

Allerdings scheiterten die Versuche daran, daß diese hochtitanhaltigen Gläser eine für Kristallglas zu hohe Schleifhärte und eine mangelnde Säurepolierbarkeit besitzen.

Gläser, die das Kristallglaskennzeichnungsgesetz vom 25. Juni 1971, Bundesgesetzblatt Nr. 59, S. 857, vom 30. Juni 1971 erfüllen sollen, müssen PbO, BaO, $K_2O$ oder ZnO alleine oder zusammen in Höhe von mindestens 10 Gew.-% enthalten, wobei eine Dichte von 2,45 g/cm$^3$ und eine Brechzahl $n_d$ von mindestens 1,520 erreicht werden muß.

Wird die Forderung erhoben, daß das Kristallglas bzw. Bleikristallglas bleifrei sein muß, so kann die gesetzliche Bestimmung durch entsprechende Mengen an ZnO, BaO und $K_2O$ erfüllt werden.

Gerade die Verwendung von $K_2O$ in größeren Mengen fördert zwar die Einschmelzbarkeit der Gläser, hat aber auf der anderen Seite negative Auswirkungen auf die chemische Beständigkeit dieser Gläser.

Des weiteren gibt es Anzeichen, daß ZnO bis zu Gehalten von $\approx$ 10 Gew.-% im Vergleich zu CaO die chemische Beständigkeit gegen Alkalilauge und Natriumphosphat verringert.

Dies würde für ein Kristallglas bedeuten, daß es gegenüber alkalischen und phosphathaltigen Reinigungsmitteln eine geringe Beständigkeit besitzt.

Weiterhin wird durch Gehalte an ZnO die Ritzhärte von Gläsern erhöht, wodurch die Gläser schleifhärter werden, was ebenfalls nicht erwünscht ist, wenn die Kristallgläser geschliffen werden sollen.

Zusätzlich besteht die Gefahr, daß die ZnO-Rohstoffe deutliche Mengen an CdO enthalten können. CdO ist schon in geringen Konzentrationen stark toxisch.

Eine weitere Forderung an hochwertiges Kristallglas ist die Eigenschaft, daß sich dieses bei der Einwirkung von kurzwelliger Strahlung (z.B. UV-Strahlung) nicht verfärbt, d.h. nicht solarisiert.

Unter Solarisation wird hier die Eigenschaft eines Glases verstanden, sich durch Einwirkung des Sonnenlichtes zu verfärben. Dabei spielt vor allem der energiereiche UV-Anteil des Sonnenlichtes eine wichtige Rolle und bewirkt bei diesen Gläsern einen Transmissionsrückgang vor allem jenseits der Wellenlänge von 380 nm, welches als UV-Grenze des sichtbaren Lichtes anzusehen ist. Der Transmissionsrückgang jenseits dieser Grenze spielt für den Farbeindruck des Glases keine Rolle, da er einen Spektralbereich betrifft, der für das Auge nicht mehr zugänglich ist. Ausläufer dieses Transmissionsrückganges können aber bis in den sichtbaren Bereich des Lichtes hineinragen, was dann zu einer störenden Färbung der Gläser führt. Bei den erfindungsgemäßen hochwertigen Kristallgläsern kann davon ausgegangen werden, daß bei den gewählten Bestrahlungsbedingungen ein Transmissionsrückgang von 3 % bei einer Wellenlänge von 380 nm nicht überschritten werden sollte.

Aus der WO 92/19559 A1 sind bleifreie Kristallgläser mit einem Brechwert im Bereich von 1.53 - 1.58 bekannt, die $SiO_2$, $Al_2O_3$, $ZrO_2$, CaO und/oder MgO, $K_2O$ und/oder $Na_2O$ enthalten, wobei (in Gew.-%) 50 - 65 % $SiO_2$; 0.1 - 10 % $Al_2O_3$; 0.5 - 17 % $ZrO_2$; 10 - 22 % $K_2O$ und/oder $Na_2O$; 2 - 10 % CaO und/oder MgO eingesetzt werden und der Anteil an $Fe_2O_3$ zwischen 0.01 und 0.025 % beträgt.

Des weiteren können diese Glaszusammensetzungen 0.1 - 10 % BaO, ZnO, $B_2O_3$ und $Li_2O$ und in Spuren bis 1 % $Sb_2O_3$, $TiO_2$ und $SnO_2$ enthalten.

Aufgabe dieser WO-Patentanmeldung ist es, bleifreie Kristallgläser hoher Dichte und hoher Brechung anzugeben, die leicht erschmelzbar, verarbeitbar und gravierbar sein sollen.

Die Gläser nach der WO 92/19559 A1 weisen auf Grund ihrer Zusammensetzung aber keine den täglichen Anforderungen genügende hydrolytische Beständigkeit auf und können eine Bariumlässigkeit, im Falle ein BaO-Zugabe, nicht zuverlässig vermeiden.

Aus der US-PS 2,901,365 ist ein Glas mit einer Dichte von 2.55 - 2.65 g/cm$^3$ und einem Brechungsindex $n_d$ von 1.56 - 1.58 bekannt, das sich hauptsächlich aus folgenden Bestandteilen (Gew.-%), 58-64 $SiO_2$; 0-17.5 $Na_2O$; 0-15.5 $K_2O$; 0-5 $Li_2O$; $\Sigma$ der Alkalimetalloxide 12.5-17.5; 7.5-14 der Erdalkalimetalloxide ausgewählt aus CaO und CaO + MgO; 5-9 $TiO_2$; 0-10 $B_2O_3$; 0-3 $Al_2O_3$; zusammensetzt, wobei die Hauptbestandteile plus geringe Mengen an farbgebenden Verbindungen sich im Glas zu 100 Gew.-% addieren.

Aufgabe dieser US-PS 2,901,365 ist es, ophthalmische Gläser, also Brillengläser, zur Verfügung zu stellen, die leicht sind und dabei einen relativ hohen Brechungsindex aufweisen.

Diese Gläser liegen in einem Alkali-Kalk-Silikat-System dem $TiO_2$ zugesetzt werden muß, um die geringe Dichte der Gläser zu gewährleisten und einen hohen Brechungsindex zu erreichen.

Dazu wird dem Glas mindestens 5 Gew.-% $TiO_2$ zugegeben, da weniger $TiO_2$ nicht ausreicht, um die Aufgabe zu lösen.

Diese Gläser enthalten weder $ZrO_2$ noch $Nb_2O_5$ oder $Ta_2O_5$.

Aus der US-PS 4,036,623 ist ein Verfahren zur chemischen Härtung eines ophthalmischen Kronglases bekannt, mit der Zusammensetzung $SiO_2$ 60-75; $Na_2O$ 5-10; $K_2O$ 5-10; CaO 7-15; $Li_2O$ 0-5; MgO 0-2; ZnO 2-8; $Al_2O_3$ 0-7; $ZrO_2$ 0-2; $TiO_2$ 0-2; $Sb_2O_3$ 0-2; $CeO_2$ 0-4.5; $As_2O_3$ 0-1.5, wobei diese Gläser dann noch temperaturbehandelt und in ein erhitztes Salzbad getaucht werden.

Dieses US-Patent betrifft ein Verfahren um Brillengläser, Sonnenbrillengläser und ähnliche ophthalmische Linsen durch chemische Härtung mittels Ionenaustausch in ihren Gebrauchseigenschaften zu verbessern.

Dieses Ausgangsglas nach der US-PS 4,036,623 enthält zwingend mindestens 2 Gew.-% ZnO und maximal 10 Gew.-% $K_2O$.

Das Glas enthält auch kein $Nb_2O_5$.

Weder die für Kristallglas geforderte Dichte von mindestens 2.45 $g/cm^3$, noch der Brechwert von größer als 1.52 wird von den meisten der hier angegebenen Glaszusammensetzungen erreicht werden.

Aufgabe der Erfindung ist es, ein bleifreies Kristallglas zur Herstellung von hochwertigen, toxikologisch unbedenklichen Gläsern und Haushaltsgegenständen mit einer hohen Lichttransmission, hoher hydrolytischer Beständigkeit, ohne nachweisbare Bariumlässigkeit und sehr geringer Solarisationsneigung zur Verfügung zu stellen, das die gesetzlichen Auflagen erfüllt.

Unter bleifrei wird dabei verstanden, daß keine Bleiverbindungen dem Gemenge zugesetzt werden. Jedoch ist es möglich, daß trotz aller Vorkehrungen über Verunreinigungen PbO in Mengen bis ca. 100 ppm in das Glas eingeschleppt werden.

Die Aufgabe der Erfindung wird durch Kristallgläser nach den Ansprüchen 1 und 4 gelöst.

Das Glassystem ist auf einem Alkali-Kalk-Silikatglas aufgebaut. Alkali-Kalk-Silikatgläser sind als Stand der Technik schon lange als toxikologisch unbedenkliche Gläser bekannt.

$SiO_2$ fungiert im Glas als Netzwerkbildner und kann in gewissen Grenzen gegen andere bekannte Netzwerkbildner, wie z.B. $B_2O_3$ ausgetauscht werden, ohne daß sich signifikante Änderungen hinsichtlich der Glasstabilität ergeben.

Der Kalk-Anteil fungiert als Netzwerkwandler, wobei dieser gegen andere zweiwertige Netzwerkwandler im erfindungsgemäßen Bereich ausgetauscht werden kann, z.B. gegen MgO, SrO oder ZnO. Allerdings ist die Möglichkeit der Einführung von MgO beschränkt, da mit einer MgO-Einführung das Entglasungsverhalten deutlich erhöht wird, was sich negativ auf die Produzierbarkeit dieser Gläser auswirkt. SrO und ZnO kann im Austausch gegen CaO ebenfalls in das Glas in den angegebenen Grenzen eingeführt werden, ohne daß es zu Entmischungen oder Trübungen im Glas kommt.

BaO wird dem Glas als Ersatz für PbO zugegeben. Es erhöht den Brechwert und fördert die Brillanz der fertigen Trinkgläser. Gleichzeitig setzt das BaO die Viskosität der Gläser herab, so daß diese besser läutern und für die Verarbeitung in der Heißformgebung besser geeignet sind als Ba-freie Gläser des gleichen Typs.

Ein gewisser Fluorid-Anteil zur Verbesserung der Transmission im UV-Bereich und zur Unterstützung der Läuterung kann in das Glasgemenge eingebracht werden, z.B. als $CaF_2$.

Die Verwendung von $Li_2O$ ist auf den erfindungsgemäßen Bereich beschränkt, da diese Komponente ebenfalls stark erhöhend auf die Entglasungsneigung der Gläser wirkt.

Die Verwendung von Alkalien darf den nach der Erfindung vorgeschlagenen Bereich nicht überschreiten, da mit steigendem Alkaligehalt die thermische Dehnung erhöht, und damit die Temperaturwechselbeständigkeit der Gläser erniedrigt wird.

Als besonders vorteilhaft nach der vorliegenden Erfindung haben sich dabei $K_2O$-Gehalte von 2-15 Gew.-%, $Na_2O$-Gehalte von 6-13 Gew.-%, CaO-Gehalte von 4-7 Gew.-% bei einem BaO-Gehalt von 1-8 Gew.-% erwiesen.

Andererseits führt ein Unterschreiten des Alkaligehaltes zu einer sehr hohen Viskosität der Gläser, wodurch sich hohe Schmelzkosten ergeben und die Herstellung sehr viel schwieriger würde.

Da die Komponenten $Ta_2O_5$ und $Nb_2O_5$ sehr teuer sind, werden die Komponenten $TiO_2$ und $ZrO_2$ bevorzugt.

Der gezielte Einsatz gerade der Komponenten $Nb_2O_5$ oder $TiO_2$ oder $TiO_2$ zusammen mit $ZrO_2$ ist in bevorzugter Auswahl der erfinderischen Glaszusammensetzung zur Lösung der gestellten Aufgabe von besonderer Bedeutung.

Da diese Komponenten neben der Brechzahl auch die chemische Beständigkeit der Gläser, sowie deren Härte erhöhen, sind ihrer Verwendung die in der Erfindung genannten Grenzen gesetzt.

Wird der Anteil dieser Komponenten höher als nach der Erfindung vorgeschlagen gewählt, so sind die Gläser kaum mehr wirtschaftlich zu bearbeiten, da die Schleifhärte eine nicht mehr tolerierbare Höhe erreicht hat, und eine Säurepolitur der Gläser nur noch schwer möglich ist. Wird der Anteil jedoch zu niedrig gewählt, so besitzen die Gläser eine zu geringe chemische Beständigkeit. Gerade bei relativ rauhen Reinigungsprozessen, z.B. in Spülmaschinen, kann es dann zu unerwünschten Glasveränderungen, bis zur Zerstörung des Glases, kommen.

Es werden nach der Erfindung bevorzugt die Komponenten $TiO_2$ und $ZrO_2$ zusammen in Mengen von mindestens 0,3 Gew.-% eingesetzt.

Dies hat den Vorteil, daß bei annähernd gleicher Wirkungsweise auf die optischen Eigenschaften und die Brillianz der Gläser insgesamt weniger von dem gegen Reduktion empfindlichen $TiO_2$ verwendet werden kann. $TiO_2$ erhöht zusätzlich stark die UV-Absorption der Gläser.

Da $TiO_2$ aber vor allem die Säurebeständigkeit von Gläsern erhöht und $ZrO_2$ die Laugenbeständigkeit, kann dem schädlichen Einfluß von hohen Alkaligehalten auf die chemischen Eigenschaften durch Zugabe dieser beiden Oxide in erfinderischer Weise entgegengewirkt werden.

Die Verbesserung der Säurebeständigkeit der Gläser ist so gut, daß es ohne weiteres möglich ist, BaO in das Glas einzuführen, ohne die in P 43 03 474.8 beschriebenen Probleme durch eine Bariumlässigkeit der Gläser zu erhalten. D. h., obwohl die Gläser BaO enthalten, ist eine Bariumlässigkeit bei den Gläsern nicht mehr nachweisbar.

Gleichzeitig haben die Komponenten, und hier besonders die Komponente $TiO_2$, eine Schutzwirkung vor einer unerwünschten und störenden Solarisation.

Das Glas enthält in bevorzugter Ausgestaltung noch 0,4 - 3,0 Gew.-% $Al_2O_3$.

Dieser Zusatz fördert die thermische und mechanische Widerstandsfähigkeit. Besonders schon geringe Zusätze dieses Oxids führen zu einer Verminderung der Korrosion der feuerfesten Auskleidung in den Schmelzaggregaten, wodurch störende Verunreinigungen aus diesen Auskleidungsmaterialien, z.B. $Fe_2O_3$, verringert werden können.

Der erfindungsgemäße Bereich der Kristallglaszusammensetzung wurde derart gewählt, daß sich bei den Forderungen an das Glas insgesamt ein Optimum der Eigenschaften ergibt.

Als bevorzugte Zusammensetzungen haben sich bei Versuchen Gemenge aus 66-69 Gew.-% $SiO_2$, 0.40-2.0 Gew.-% $Al_2O_3$, 7.6-13 Gew.-% $Na_2O$, 2-12.5 Gew.-% $K_2O$, 4-7 Gew.-% CaO, 1-8 Gew.-% BaO, 0.5-2.5 Gew.-% $TiO_2$ und 0.5-2.5 Gew.-% $ZrO_2$ und aus 66-69 Gew.-% $SiO_2$, 0.40-2.0 Gew.-% $Al_2O_3$, 7.6-13 Gew.-% $Na_2O$, 2-12.5 Gew.-% $K_2O$, 4-7 Gew.-% CaO, 1-8 Gew.-% BaO und 0.5-2.5 Gew.-% TiO erwiesen.

Dabei ist zu beachten, daß in den bevorzugten Zusammensetzungen der Gehalt an $TiO_2$, $ZrO_2$ oder $Ta_2O_5$ alleine oder in der Summe maximal 4 Gew.-% betragen sollte, da sich sonst die Verarbeitungs- und Gebrauchseigenschaften der Gläser verschlechtern.

Alle Glaszusammensetzungen enthalten Läuterhilfsmittel, z.B. $Sb_2O_3$, bis zu einem Gehalt von 1 Gew.-% und sie können übliche Mengen bis zu 100 ppm an Entfärbungsmitteln, wie z.B. CoO, NiO enthalten, in Abhängigkeit der Reinheit der Ausgangsrohstoffe.

Um die Erfindung weiter zu verdeutlichen, sind beispielhaft in den Tabellen 1, 2 und 3 die Glaszusammensetzungen und Eigenschaften von 9 daraus erschmolzenen Gläsern nach der Erfindung zusammengestellt.

Die Schmelzbeispiele wurden ohne Entfärbungsmittel geschmolzen. Es wurden darüberhinaus Rohstoffe eingesetzt, die eine PbO-Verunreinigung von max. 50 ppm im erschmolzenen Glas verursachen. Der Gehalt an $Fe_2O_3$ liegt in den Gläsern unter 150 ppm. Andere färbende Übergangsmetalle konnten in den Gläsern nicht nachgewiesen werden.

Neben dem Brechwert ist der Lichttransmissionsgrad ("Lichttransmission") nach DIN 67507 und die Normalfarbwertanteile x und y nach DIN 5033 bei einer Glasschichtdicke von 11 mm angegeben. Die Angabe des Lichttransmissionsgrades erfolgt in den Beispieltabellen in Teilen von 100 (%) für die Normlichtart C und den 2° Beobachter. Die Messungen wurden mit einem Spektralphotometer der Fa. Perkin-Elmer vom Typ Lambda 9 ausgeführt, das zur Verminderung von Meßfehlern durch Probeninhomogenitäten zusätzlich mit einer integrierenden Kugel ("Ulbricht-Kugel") ausgerüstet ist. Die angegebenen Meßwerte besitzen einen Meßfehler von ± 0.5 %.

Die Solarisationsbeständigkeit wird mittels eines Schnellbelichtungsgerätes "SUNTEST CPS" der Fa. Heraeus geprüft. Dabei wird die Probe von einer Xe-Lampe mit einer Leistungsaufnahme von 1.8 kW und einer maximalen Bestrahlungsstärke ($\lambda$ < 800 nm; Filtersystem: "max UV") von 765 W/m² für einen Zeitraum von 121 h bestrahlt. Der Abstand zwischen Lampe und Probe beträgt dabei 19 cm. Zwischen Lampe und Probe ist an der im Gerät vorgesehenen Stelle eine Quarzglasschale mit IR reflektierender Schicht eingebaut, wodurch eine unerwünschte Aufheizung der Probe verhindert wird. Während der Bestrahlungsdauer wird eine Temperatur von 40°C an der Probe nicht überschritten. Die Bestrahlung wird an Proben von 5 mm Glasschichtdicke durchgeführt, und der spektrale Transmissionsgrad ("Transmission") bei einer Wellenlänge von 380 nm vor und nach der Bestrahlung gemessen. Der Unterschied in der Transmission vor und nach der Bestrahlung ist in Teilen von 100 (%) in der Zeile "Suntest" angegeben. Die Messungen wurden mit dem o.g. Spektralphotometer durchgeführt. Die angegebenen Meßwerte besitzen einen Meßfehler von ± 0.5 %. Weiterhin sind die Dichte der Gläser sowie die Klassen der hydrolytischen Beständigkeit nach DIN 12111 aufgeführt.

In Beispiel 2 wurden Oxide teilweise durch Fluoride ersetzt. $F_2$-O stellt bei diesem Beispiel den Anteil von Sauerstoffatomen dar, die durch Fluor ersetzt wurden. Durch die Angabe von $F_2$-O ist es möglich, eine Normierung der Beispiele auf 100 % durchzuführen, wenn Fluor eingesetzt wird.

Der Umrechnungsfaktor zur Umrechnung des Gewichtsanteils F in den Wert $F_2$-O errechnet sich dabei nach folgender Formel:

$$F_2\text{-}O = F \cdot \frac{(2 \times 19) - 16}{2 \times 19}$$

$$F_2\text{-}O = F \cdot 0{,}579.$$

Tabelle 1

| Komponente | 1 | 2 |
|---|---|---|
| $SiO_2$ | 68,10 | 67,83 |
| $Al_2O_3$ | 0,50 | 0,54 |
| $Li_2O$ | | |
| $Na_2O$ | 9,10 | 9,07 |
| $K_2O$ | 10,40 | 10,18 |
| $CaO$ | 7,60 | 7,66 |
| $MgO$ | | |
| $BaO$ | 2,90 | 2,91 |
| $TiO_2$ | 1,05 | 0,61 |
| $ZrO_2$ | | 0,74 |
| $F_2$-O | | 0,10 |
| $Sb_2O_3$ | 0,35 | 0,37 |
| $F_2$ | | 0,17 |
| optische Werte: | | |
| $n_d$ | 1,525 | 1,525 |
| x | 0,3107 | 0,3107 |
| y | 0,3176 | 0,3174 |
| $\tau$ (%) | 90,8 | 90,8 |
| Suntest (%) | ± 0 | - 1,0 |
| physikalische Werte: | | |
| $\rho$ | 2,55 | 2,56 |
| chemische Daten: | | |
| hydrol. Kl. | 5 | 5 |

Tabelle 2

| Komponente | 3 | 4 | 5 |
|---|---|---|---|
| $SiO_2$ | 67,53 | 67,01 | 66,91 |
| $B_2O_3$ | | | 1,00 |
| $Al_2O_3$ | 0,58 | 0,70 | 0,54 |
| $Na_2O$ | 9,74 | 9,12 | 9,69 |
| $K_2O$ | 9,68 | 10,44 | 9,55 |
| MgO | | | |
| CaO | 7,73 | 6,62 | 7,68 |
| SrO | | | |
| BaO | 2,91 | 2,91 | 2,91 |
| ZnO | | 2,36 | |
| $TiO_2$ | | 0,47 | 0,61 |
| $ZrO_2$ | | | 0,74 |
| $Nb_2O_5$ | 1,45 | | |
| $Sb_2O_3$ | 0,37 | 0,37 | 0,37 |
| optische Werte: | | | |
| $n_d$ | 1,525 | 1,525 | 1,529 |
| x | 0,3106 | 0,3106 | 0,3107 |
| y | 0,3175 | 0,3175 | 0,3176 |
| $\tau$ (%) | 90,7 | 90,8 | 90,8 |
| Suntest (%) | - 1,5 | - 0,5 | -1,0 |
| physikalische Werte: | | | |
| $\rho$ | 2,56 | 2,57 | 2,57 |
| chemische Daten: | | | |
| hydrol. Kl. | 5 | 5 | 3 |

Tabelle 3

| Komponente | 6 | 7 | 8 | 9 |
|---|---|---|---|---|
| $SiO_2$ | 64,95 | 67,92 | 67,89 | 67,94 |
| $B_2O_3$ | 0,86 | | | |
| $Al_2O_3$ | 1,65 | 0,61 | 0,54 | 0,67 |
| $Na_2O$ | 7,21 | 10,74 | 10,69 | 10,80 |
| $K_2O$ | 11,48 | 9,69 | 9,17 | 10,20 |
| MgO | | | | |
| CaO | 5,27 | 5,77 | 5,97 | 5,57 |
| SrO | | | | |
| BaO | 2,91 | 2,91 | 1,45 | 4,36 |
| ZnO | | | | |
| $TiO_2$ | 3,62 | 1,00 | 0,50 | 1,49 |
| $ZrO_2$ | 1,60 | 1,00 | 0,50 | 1,49 |
| $Nb_2O_5$ | | | | |
| $Sb_2O_3$ | 0,45 | 0,39 | 0,39 | 0,39 |
| optische Werte: | | | | |
| $n_d$ | 1,540 | 1,524 | 1,521 | 1,526 |
| x | 0,3122 | 0,3109 | 0,3106 | 0,3106 |
| y | 0,3248 | 0,3178 | 0,3174 | 0,3175 |
| $\tau$ (%) | 90,0 | 90,6 | 91,1 | 90,8 |
| Suntest (%) | ± 0 | - 0,5 | - 0,5 | ± 0 |
| physikalische Werte: | | | | |
| $\rho$ | 2,58 | 2,555 | 2,561 | 2,549 |
| chemische Daten: | | | | |
| hydrol. Kl. | 3 | 5 | 5 | 5 |

**Patentansprüche**

1. Bleifreies Kristallglas zur Herstellung von hochwertigen Gläsern und Haushaltsgegenständen mit einer Lichttransmission von wenigstens 85 %, einem Brechwert $n_d$ von größer als 1.52, einer Dichte von mindestens 2.45 g/cm³, einem $K_2O$ + BaO + ZnO-Anteil von größer 10 Gew.-%, hoher hydrolytischer Beständigkeit, ohne nachweisbare Bariumlässigkeit und guter Solarisationsbeständigkeit, **dadurch gekennzeichnet,**

daß es sich aus (in Gew.-% auf Oxidbasis)

| | |
|---|---|
| $SiO_2$ | 50 - 75 |
| $Na_2O$ | 2 - 15 |
| $K_2O$ | 1 - 15 |
| $CaO$ | 3 - 12 |
| $BaO$ | 1 - 10 |
| $B_2O_3$ | 0 - 10 |
| $Al_2O_3$ | 0 - 5 |
| $Li_2O$ | 0 - 5 |
| $MgO$ | 0 - 5 |
| $SrO$ | 0 - 7 |
| $ZnO$ | 0 - 7 |
| $TiO_2$ | 0 - 8 |
| $ZrO_2$ | 0 - 5 |
| $Nb_2O_5$ | 0,1 - 5 |
| $Ta_2O_5$ | 0 - 5 |
| F | 0 - 2 |

zusammensetzt, wobei die Summe von $TiO_2 + ZrO_2 + Nb_2O_5 + Ta_2O_5$ zwischen 0,3 - 12 Gew.-% beträgt und wobei die Summe der Alkalien größer als 10 Gew.-% ist.

2.  Bleifreies Kristallglas nach Anspruch 1,
    **dadurch gekennzeichnet,**
    daß der Gehalt an

| | |
|---|---|
| $K_2O$ | 2 - 15 |
| $Na_2O$ | 6 - 13 |
| $CaO$ | 4 - 7 |
| $BaO$ | 1 - 8 |

Gew.-% beträgt.

3.  Bleifreies Kristallglas nach Anspruch 1,
    **dadurch gekennzeichnet,**
    daß es einen $Al_2O_3$-Gehalt von 0,4 - 3,0 Gew.-% aufweist.

4.  Bleifreies Kristallglas zur Herstellung von hochwertigen Gläsern und Haushaltsgegenständen mit einer Lichttransmission von wenigstens 85 %, einem Brechwert $n_d$ von größer als 1.52, einer Dichte von mindestens 2.45 g/cm³, einem $K_2O + BaO + ZnO$-Anteil von größer 10 Gew.-%, hoher hydrolytischer Beständigkeit, ohne nachweisbare Bariumlässigkeit und guter Solarisationsbeständigkeit,
    **dadurch gekennzeichnet,**

daß es sich aus (in Gew.-% auf Oxidbasis)

| | |
|---|---|
| $SiO_2$ | 50 - 75 |
| $Na_2O$ | 6 - 15 |
| $K_2O$ | 1 - 15 |
| $CaO$ | 3 - 12 |
| $BaO$ | 1 - 10 |
| $B_2O_3$ | 0 - 10 |
| $Al_2O_3$ | 0,3 - 3 |
| $Li_2O$ | 0 - 5 |
| $MgO$ | 0 - 5 |
| $SrO$ | 0 - 7 |
| $ZnO$ | 0 - 7 |
| $TiO_2$ | 0,3 - 8 |
| $ZrO_2$ | 0 - 5 |
| $Nb_2O_5$ | 0 - 5 |
| $Ta_2O_5$ | 0 - 5 |
| $F$ | 0 - 2 |

zusammensetzt, wobei die Summe von $TiO_2$ + $ZrO_2$ + $Nb_2O_5$ + $Ta_2O_5$ zwischen 0,3 - 12 Gew.-% beträgt.

5. Bleifreies Kristallglas nach Anspruch 4,
   **dadurch gekennzeichnet,**
   daß der Gehalt an

| | |
|---|---|
| $CaO$ | 4 - 7 und |
| $BaO$ | 1 - 8 |

Gew.-% beträgt.

6. Bleifreies Kristallglas nach den Ansprüchen 4 und 5,
   **gekennzeichnet durch**

die Zusammensetzung (Gew.-%)

| | |
|---|---|
| $SiO_2$ | 66 - 69 |
| $Al_2O_3$ | 0,40- 2 |
| $Na_2O$ | 7,6 - 13 |
| $K_2O$ | 2 - 12,5 |
| CaO | 4 - 7 |
| BaO | 1 - 8 |
| $TiO_2$ | 0,5 - 2,5 |
| $ZrO_2$ | 0,5 - 2,5 |

7. Bleifreies Kristallglas nach den Ansprüchen 4 und 5,
   **gekennzeichnet durch**
   die Zusammensetzung (Gew.-%)

| | |
|---|---|
| $SiO_2$ | 66 - 69 |
| $Al_2O_3$ | 0,40- 2 |
| $Na_2O$ | 7,6 - 13 |
| $K_2O$ | 2 - 12,5 |
| CaO | 4 - 7 |
| BaO | 1 - 8 |
| $TiO_2$ | 0,5 - 2,5 |

8. Bleifreies Kristallglas nach einem der Ansprüche 1 bis 6,
   **dadurch gekennzeichnet,**
   daß der Gehalt an $TiO_2$, $ZrO_2$ oder $Ta_2O_5$ alleine oder in der Summe maximal 4 Gew.-% beträgt.

**Claims**

1. Lead-free crystal glass for the manufacture of high-quality glasses and household articles, having a light transmission of at least 85%, a refractive index $n_d$ greater than 1.52, a density of at least 2.45 g/cm³, a $K_2O + BaO + ZnO$ content greater than 10 wt-%, high hydrolytic resistance, no detectable leaching of barium ions and good resistance

**10**

to solarisation, characterised in that it is composed of the following (as wt-% based on oxide):

| | |
|---|---|
| $SiO_2$ | 50 - 75 |
| $Na_2O$ | 2 - 15 |
| $K_2O$ | 1 - 15 |
| $CaO$ | 3 - 12 |
| $BaO$ | 1 - 10 |
| $B_2O_3$ | 0 - 10 |
| $Al_2O_3$ | 0 - 5 |
| $Li_2O$ | 0 - 5 |
| $MgO$ | 0 - 5 |
| $SrO$ | 0 - 7 |
| $ZnO$ | 0 - 7 |
| $TiO_2$ | 0 - 8 |
| $ZrO_2$ | 0 - 5 |
| $Nb_2O_5$ | 0.1 - 5 |
| $Ta_2O_5$ | 0 - 5 |
| $F$ | 0 - 2, |

with the sum of $TiO_2 + ZrO_2 + Nb_2O_5 + Ta_2O_5$ being between 0.3 and 12 wt-% and with the sum of the alkalis being greater than 10 wt-%.

2. Lead-free crystal glass according to Claim 1, characterised in that the percentages by weight of the following compounds are:

| | |
|---|---|
| $K_2O$ | 2 - 15 |
| $Na_2O$ | 6 - 13 |
| $CaO$ | 4 - 7 |
| $BaO$ | 1 - 8 |

3. Lead-free crystal glass according to Claim 1, characterised in that it exhibits an $Al_2O_3$ content of from 0.4 to 3.0 wt-%.

4. Lead-free crystal glass for the manufacture of high-quality glasses and household articles, having a light transmission of at least 85%, a refractive index $n_d$ greater than 1.52, a density of at least 2.45 g/cm$^3$, a $K_2O + BaO + ZnO$ content greater than 10 wt-%, high hydrolytic resistance, no detectable leaching of barium ions and good resistance to solarisation, characterised in that it is composed of the following (as wt-% based on oxide):

| | |
|---|---|
| SiO$_2$ | 50 - 75 |
| Na$_2$O | 6 - 15 |
| K$_2$O | 1 - 15 |
| CaO | 3 - 12 |
| BaO | 1 - 10 |
| B$_2$O$_3$ | 0 - 10 |
| Al$_2$O$_3$ | 0.3 - 3 |
| Li$_2$O | 0 - 5 |
| MgO | 0 - 5 |
| SrO | 0 - 7 |
| ZnO | 0 - 7 |
| TiO$_2$ | 0.3 - 8 |
| ZrO$_2$ | 0 - 5 |
| Nb$_2$O$_5$ | 0 - 5 |
| Ta$_2$O$_5$ | 0 - 5 |
| F | 0 - 2, |

with the sum of TiO$_2$ + ZrO$_2$ + Nb$_2$O$_5$ + Ta$_2$O$_5$ being between 0.3 and 12 wt-%.

5. Lead-free crystal glass according to Claim 4, characterised in that the percentages by weight of the following compounds are:

| | |
|---|---|
| CaO | 4 - 7 and |
| BaO | 1 - 8. |

6. Lead-free crystal glass according to Claims 4 and 5, characterised by the composition (wt-%):

| | |
|---|---|
| SiO$_2$ | 66 - 69 |
| Al$_2$O$_3$ | 0.4 - 2 |
| Na$_2$O | 7.6 - 13 |
| K$_2$O | 2 - 12.5 |
| CaO | 4 - 7 |
| BaO | 1 - 8 |
| TiO$_2$ | 0.5 - 2.5 |
| ZrO$_2$ | 0.5 - 2.5. |

7. Lead-free crystal glass according to Claims 4 and 5, characterised by the composition (wt-%):

| | |
|---|---|
| $SiO_2$ | 66 - 69 |
| $Al_2O_3$ | 0.4 - 2 |
| $Na_2O$ | 7.6 - 13 |
| $K_2O$ | 2 - 12.5 |
| CaO | 4 - 7 |
| BaO | 1 - 8 |
| $TiO_2$ | 0.5 - 2.5. |

8. Lead-free crystal glass according to one of Claims 1 to 6, characterised in that the maximum content of $TiO_2$, $ZrO_2$ or $Ta_2O_5$, either alone or in total, is 4 wt-%.

**Revendications**

1. Verre de cristal sans plomb pour la fabrication de verres et d'objets ménagers de haute qualité, présentant une transmission de lumière d'au moins 85%, un indice de réfraction $n_d$ supérieur à 1,52, une densité d'au moins 2,45 $g/cm^3$, une teneur en $K_2O$ + BaO + ZnO supérieure à 10% en poids, une résistance élevée à l'hydrolyse, sans libération détectable de baryum et une bonne résistance à la "solarisation",
*caractérisé par le fait*,
qu'il contient les composés suivants (les chiffres correspondent à des % en poids basés sur le poids des oxydes)

| | |
|---|---|
| $SiO_2$ | 50 - 75 |
| $Na_2O$ | 2 - 15 |
| $K_2O$ | 1 - 15 |
| CaO | 3 - 12 |
| BaO | 1 - 10 |
| $B_2O_3$ | 0 - 10 |
| $Al_2O_3$ | 0 - 5 |
| $Li_2O$ | 0 - 5 |
| MgO | 0 - 5 |
| SrO | 0 - 7 |
| ZnO | 0 - 7 |
| $TiO_2$ | 0 - 8 |
| $ZrO_2$ | 0 - 5 |
| $Nb_2O_5$ | 0,1 - 5 |
| $Ta_2O_5$ | 0 - 5 |
| F | 0 - 2 |

la somme des poids de $TiO_2$ + $ZrO_2$ + $Nb_2O_5$ + $Ta_2O_5$ est comprise entre 0,3 et 12% en poids et le poids total des alcalis est supérieur à 10% en poids.

2. Verre de cristal sans plomb, selon la revendication 1, caractérisé par le fait que la teneur en $K_2O$, $Na_2O$, CaO et BaO est indiquée dans la liste suivante :

|  | % en poids |
|---|---|
| $K_2O$ | 2 - 15 |
| $Na_2O$ | 6 - 13 |
| CaO | 4 - 7 |
| BaO | 1 - 8 |

3. Verre de cristal sans plomb, selon la revendication 1,
   *caractérisé par le fait*,
   qu'il renferme de 0,4 à 3,0% en poids de $Al_2O_3$.

4. Verre de cristal sans plomb pour la préparation de verres et d'objets ménagers, présentant une transmission de lumière d'au moins de 85% en poids, un indice de réfraction $n_d$ supérieur à 1,52, une densité d'au moins 2,45 g/cm$^3$, une teneur en $K_2O + BaO + ZnO$ supérieure à 10% en poids, une résistance élevée à l'hydrolyse, sans libération détectable de baryum et une bonne résistance à la solarisation,
   *caractérisé par le fait*,
   que sa composition (exprimée en % en poids basé sur le poids total des oxydes) est la suivante :

| $SiO_2$ | 50 - 75 |
|---|---|
| $Na_2O$ | 6 - 15 |
| $K_2O$ | 1 - 15 |
| CaO | 3 - 12 |
| BaO | 1 - 10 |
| $B_2O_3$ | 0 - 10 |
| $Al_2O_3$ | 0,3 - 3 |
| $Li_2O$ | 0 - 5 |
| MgO | 0 - 5 |
| SrO | 0 - 7 |
| ZnO | 0 - 7 |
| $TiO_2$ | 0,3 - 8 |
| $ZrO_2$ | 0 - 5 |
| $Nb_2O_5$ | 0 - 5 |
| $Ta_2O_5$ | 0 - 5 |
| F | 0 - 2 |

la teneur totale en $TiO_2 + ZrO_2 + Nb_2O_5 + Ta_2O_5$ étant comprise entre 0,3 et 12% en poids.

5. Verre de cristal sans plomb, selon la revendication 4,
   *caractérisé par le fait*,
   qu'il renferme
   de 4 à 7% en poids de CaO, et
   de 1 à 8% en poids de BaO.

**6.** Verre de cristal sans plomb selon les revendications 4 et 5,
   *caractérisé par le fait*,
   que sa composition (exprimée en % en poids) est la suivante :

| | |
|---|---|
| $SiO_2$ | 66 - 69 |
| $Al_2O_3$ | 0,40- 2 |
| $Na_2O$ | 7,6 - 13 |
| $K_2O$ | 2 - 12,5 |
| CaO | 4 - 7 |
| BaO | 1 - 8 |
| $TiO_2$ | 0,5 - 2,5 |
| $ZrO_2$ | 0,5 - 2,5 |

**7.** Verre de cristal selon les revendications 4 et 5,
   *caractérisé par le fait*,
   que sa composition (exprimée en % en poids) est la suivante :

| | |
|---|---|
| $SiO_2$ | 66 - 69 |
| $Al_2O_3$ | 0,40- 2 |
| $Na_2O$ | 7,6 - 13 |
| $K_2O$ | 2 - 12,5 |
| CaO | 4 - 7 |
| BaO | 1 - 8 |
| $TiO_2$ | 0,5 - 2,5 |

**8.** Verre de cristal selon l'une des revendications 1 à 6,
   *caractérisé par le fait*,
   que sa teneur en $TiO_2$, $ZrO_2$ ou $Ta_2O_5$ pris individuellement ou ensemble est au maximum de 4% en poids.